# DEMANDE DE BREVET EUROPEEN

(11) **EP 0 790 692 A1**
(43) Date de publication de la demande: **20.08.1997**
(21) Numéro de dépôt: 97400250.3
(22) Date de dépôt: 05.02.1997
(51) Int. Cl.: H02J 7/16, H02J 1/02

(54) **Circuit de détection de composantes perturbatrices à haute fréquence dans un réseau de bord de véhicule automobile, circuit régulateur l'incorporant et procédé de gestion de mode dégradé associé**

(30) Priorité: 06.02.1996 FR 9601402
(71) Demandeur: VALEO EQUIPEMENTS ELECTRIQUES MOTEUR, 94000 Créteil (FR)
(72) Inventeur: Pierret, Jean-Marie, 75012 Paris (FR)
(74) Mandataire: Le Forestier, Eric

(57) **Abrégé**

L'invention propose un circuit de détection de composantes à haute fréquence dans un potentiel de batterie (B+) d'un réseau de bord de véhicule automobile.

Il est remarquable en ce qu'il comprend un circuit RC (R1, C1) et des moyens à semi-conducteurs (D1, T1) aptes à commuter sur les alternances desdites composantes à haute fréquence lorsqu'à la fois leur période est inférieure à la constante de temps du circuit RC et leur amplitude est supérieure à des tensions de jonction dans lesdits moyens à semi-conducteurs.

L'invention propose également un circuit régulateur de la tension de charge d'une batterie par un alternateur comportant un transistor MOS de commande d'excitation et/ou un circuit de gestion de lampe-témoin de défauts auquel est intégré un tel circuit de détection, ainsi qu'un procédé de gestion du mode dégradé correspondant.

## Description

La présente invention a trait d'une façon générale aux dispositifs de détection de perturbations à haute fréquence dans le réseau de bord d'un véhicule automobile.

Il est classique, dans un circuit régulateur de la tension de charge d'une batterie par un alternateur, d'immuniser le fonctionnement du circuit vis-à-vis des perturbations à haute fréquence en associant au circuit régulateur un ou plusieurs condensateurs de filtrage de ces fréquences, dont la valeur doit être d'au moins quelques nanofarads.

Cette solution est relativement aisée à mettre en oeuvre dans un circuit régulateur monté sur circuit imprimé ou réalisé en technologie hybride, car l'encombrement des condensateurs est raisonnable.

En revanche, cette solution ne peut être mise en oeuvre dans les circuits régulateurs intégrés sur une puce de silicium unique, car on ne peut intégrer sur ce genre de puce des capacités de valeur suffisante.

La présente invention vise à contourner ce problème, et en particulier à réaliser un moyen de détection de la présence de perturbations à haute fréquence sur le réseau de bord, et en particulier sur la liaison entre alternateur et batterie, qui puisse être aisément intégré à un circuit régulateur monolithique, sans accroître sensiblement son encombrement, et sans avoir à modifier le support de ce circuit générateur (en général le porte-balais de l'alternateur).

L'invention propose également de tirer parti de cette détection pour modifier le fonctionnement du circuit régulateur de façon à éviter tout risque de surcharge de la batterie en présence de telles pertubations, et en outre pour éviter de signaler au conducteur un défaut au cours de ce fonctionnement modifié.

Ainsi, selon un premier aspect, la présente invention propose un circuit de détection de composantes à haute fréquence dans un potentiel de batterie d'un réseau de bord de véhicule automobile, caractérisé en ce qu'il comprend un circuit RC et des moyens à semi-conducteurs aptes à commuter sur les alternances desdites composantes à haute fréquence lorsqu'à la fois leur période est inférieure à la constante de temps du circuit RC et leur amplitude est supérieure à des tensions de jonction dans lesdits moyens à semi-conducteurs.

De façon préférée, ce circuit comprend une capacité dudit circuit RC entre une entrée pour le potentiel de batterie et les moyens à semi-conducteurs, et une résistance dudit circuit RC entre les moyens à semi-conducteurs et un potentiel de référence fixe.

De façon également préférée, les moyens à semi-conducteurs comprennent une diode et un transistor bipolaire, la diode étant montée en anti-parallèle sur une jonction base-émetteur du transistor, et le collecteur du transistor constituant la sortie du circuit.

L'invention propose également un circuit de détection de composantes à haute fréquence dans un potentiel de batterie d'un réseau de bord de véhicule automobile, caractérisé en ce qu'il comprend une entrée pour ledit potentiel, reliée à une première borne d'un condensateur dont la seconde borne est reliée à une première borne d'une résistance ainsi qu'à la base d'un transistor bipolaire NPN et à la cathode d'une diode, la deuxième borne de la résistance, l'anode de la diode et l'émetteur du transistor étant reliées à un potentiel de référence fixe.

Avantageusement, la constante de temps du circuit RC est d'environ 10⁻⁶ seconde.

L'invention propose en outre, selon un deuxième aspect, un circuit régulateur de la tension de charge d'une batterie par un alternateur dans un réseau de bord de véhicule automobile, comprenant un transistor de puissance en technologie MOS pour la commutation d'un enroulement d'excitation de l'alternateur, dont la grille reçoit un signal de commande d'excitation, caractérisé en ce qu'il comprend en outre un circuit de détection tel que défini ci-dessus, dont la sortie est également reliée à ladite grille, la capacité de grille dudit transistor de puissance assurant une intégration des impulsions électriques provoquées par les commutations à la sortie du circuit de détection et une suppression de l'excitation lorsque des composantes à haute fréquence sont détectées.

Il est également proposé un circuit régulateur de la tension de charge d'une batterie par un alternateur dans un réseau de bord de véhicule automobile, comprenant un circuit de gestion de lampe-témoin d'anomalies de fonctionnement dudit circuit régulateur qui comporte des moyens de détection d'anomalies et des moyens de commande de l'allumage d'une lampe-témoin en présence d'anomalies, caractérisé en ce qu'il comprend un circuit de détection tel que défini ci-dessus et un étage de mise en forme de signaux prévu à la sortie du circuit de détection pour convertir les impulsions électriques engendrées par ce dernier en un signal logique apte à empêcher l'allumage de la lampe-témoin en présence d'une anomalie liée à l'existence de composantes à haute fréquence dans le potentiel de batterie.

Préférentiellement, l'étage de mise en forme comporte un transistor et une capacité opérant par effet Miller.

Le circuit régulateur tel que défini ci-dessus est entièrement réalisé sur une puce de silicium unique.

Enfin l'invention propose un procédé de gestion d'un mode dégradé de fonctionnement d'un circuit régulateur de la charge d'une batterie par un alternateur dans un réseau de bord de véhicule automobile, caractérisé en ce qu'il comprend les étapes suivantes :
(a) on détecte l'apparition de composantes perturbatrices à haute fréquence dans le potentiel de batterie du réseau; et
(b) aussi longtemps que ces composantes perturbatrices sont présentes, on supprime l'excitation de l'alternateur tout en empêchant l'allumage d'une lampe-témoin révélant une excitation insuffisante de l'alternateur.

D'autres aspects, buts et avantages de la présente invention apparaîtront mieux à la lecture de la description détaillée suivante d'une forme de réalisation préférée de celle-ci, donnée à titre d'exemple et faite en référence aux dessins annexés, sur lesquels :
la figure 1 est le schéma d'un circuit de détection de perturbations à haute fréquence selon une forme de réalisation de l'invention,
la figure 2 est un schéma du circuit de détection de la figure 1 associé à un transistor de commutation d'excitation réalisé en technologie MOS, et
la figure 3 est un schéma du circuit de détection de la figure 1 associé à un étage de suppression des composantes à haute fréquence du signal de sortie.

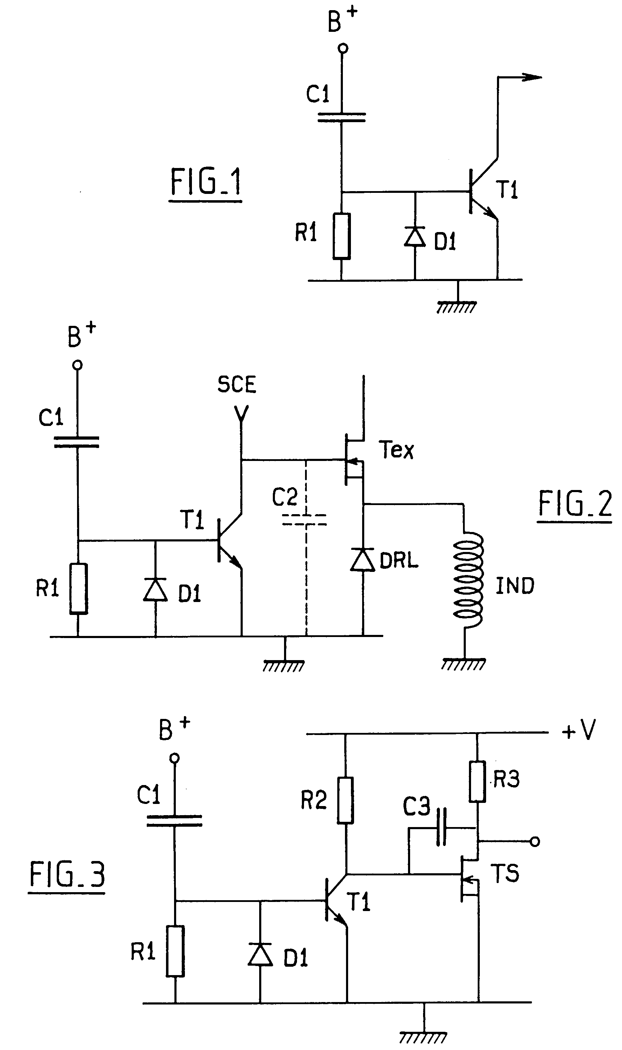

En référence tout d'abord à la figure 1, on a représenté un circuit de détection de composantes à haute fréquence qui reçoit en entrée la tension de batterie B+ du réseau de bord d'un véhicule automobile.

Le câblage électrique du véhicule joue de façon classique un rôle d'antenne radioélectrique qui capte les ondes radioélectriques de l'environnement pour induire dans la tension B+ des composantes perturbatrices à haute fréquence.

L'entrée pour la tension B+ le cas échéant perturbée est reliée à une première borne d'un condensateur C1, dont la seconde borne est reliée à une première borne d'une résistance R1 ainsi qu'à la base d'un transistor bipolaire NPN désigné par T1 et à la cathode d'une diode PN désignée par D1.

La deuxième borne de la résistance R1, ainsi que l'anode de la diode D1 et l'émetteur du transistor T1, sont reliées à la masse.

Les valeurs de C1 et de R1 sont choisies de manière à offrir une constante de temps RlCl faible, typiquement de l'ordre de 10⁻⁶ seconde, avec une intégration aisée sur une puce de silicium.

Lorsque la tension B+ n'est pas perturbée, ses évolutions sont lentes. La constante de temps RlCl est telle que la base de T1 reste toujours voisine de la masse via la résistance R1. Il en résulte que Il reste bloqué.

Lorsqu'une composante perturbatrice à haute fréquence apparaît dans la tension B+, et si la constante de temps R1C1 est élevée par rapport à la période de cette composante à haute fréquence, alors la résistance R1 ne peut plus ramener à la masse la base de T1.

Plus précisément, lors d'une alternance positive de la perturbation, C1 se charge à travers la jonction base-émetteur de T1, qui devient passant. Lors d'une alternance négative de la perturbation, C1 se décharge à travers la diode D1 et T1 se bloque.

Ainsi l'état temporairement passant de T1 indique la présence d'une composante perturbatrice à haute fréquence dans la tension B+.

On observera ici que, pour que le transistor T1 puisse commuter à une cadence rapide correspondant à la fréquence de la perturbation (typiquement comprise entre 1 et 400 MHz, comme défini par les normes en matière de compatibilité electromagnétique), il doit présenter une fréquence de transition élevée.

Les valeurs de C1 et de R1 sont de préférence choisies de manière à présenter une constante de temps de l'ordre de 10⁻⁶ seconde, avec par exemple 10 pF pour la valeur de C1 et 100 kΩ pour la valeur de R1.

On observera ici que la valeur de C1 est telle que, tout en étant suffisamment importante par rapport aux capacités parasites des autres composants, cette capacité peut être aisément intégrée dans un circuit régulateur monolithique réalisé sur une puce de silicium unique, en étant par exemple formée avec un diélectrique en oxyde épais pour pouvoir supporter les tensions élevées, et notamment les surtensions susceptibles de se produire en sortie du pont redresseur de l'alternateur du réseau de bord.

On comprend que le seuil de détection est fixé par la tension de jonction de la diode D1 et par la tension de jonction base-émetteur du transistor T1, ce qui correspond à la superposition de deux tensions de jonction de diodes, soit environ 1,6 volt dans le cas du silicium.

Le détecteur de la figure 1 est donc sensible à toute composante perturbatrice à haute fréquence dont l'amplitude crête-à-crête est supérieure à environ 1,6 volt.

En référence maintenant à la figure 2, on a représenté le circuit de détection de la figure 1 associé à un transistor de circuit d'excitation, constitué par un transistor de puissance Tex réalisé en technologie MOS (Métal-Oxyde-Semiconducteur).

Le collecteur du transistor T1 est relié directement à la grille du transistor Tex, dont le drain est relié par exemple à la tension B+ et dont la source est reliée à une borne de l'enroulement d'excitation IND de l'alternateur et à la cathode d'une diode de roue libre DRL. L'autre borne de l'enroulement IND et l'anode de la diode DRL sont reliées à la masse.

La grille de Tex reçoit également, de façon conventionnelle, un signal de commande d'excitation SCE délivré par le circuit régulateur associé à l'alternateur.

On a également représenté sur la figure 2 en pointillés la capacité de grille de Tex, inhérente à la technologie MOS.

Lorsque le potentiel B+ est dépourvu de composantes perturbatrices à haute fréquence, le transistor T1 reste bloqué et n'influe pas sur le fonctionnement de la régulation.

Lorsqu'une telle composante perturbatrice est présente, le transistor T1 devient alternativement passant et bloqué à cadence élevée, et la capacité de grille de Tex joue le rôle d'intégrateur des impulsions de tension délivrées par le transistor T1, pour faire tendre rapidement le potentiel de grille vers zéro et bloquer le transistor d'excitation Tex.

Ainsi, en présence de perturbations à haute fréquence d'amplitude importante, l'excitation de l'alternateur est bloquée.

Il s'agit d'un mode de fonctionnement dégradé tout à fait acceptable dans la mesure où l'on diminue tout risque de surcharge de la batterie par l'alternateur, et surtout dans la mesure où cette situation est le plus souvent très provisoire. En effet, dès que le véhicule s'éloigne de l'émetteur HF provoquant la perturbation, ou dès que cet émetteur cesse d'émettre (cas notamment d'un émetteur embarqué), le transistor T1 devient à nouveau bloqué et la régulation peut reprendre normalement.

En référence maintenant à la figure 3, on a illustré une variante de réalisation applicable lorsqu'il est nécessaire d'obtenir à la sortie du circuit de détection de la figure 1 un changement de niveau franc, unique, notamment lorsque le transistor de puissance utilisé pour la commutation de l'excitation n'est pas un transistor MOS et ne comporte donc pas une capacité de grille suffisante pour jouer le rôle d'un intégrateur, ou encore dans le cas où le signal de sortie du circuit de détection doit être utilisé comme signal logique pour agir sur un circuit de gestion de lampe-témoin associé au circuit régulateur lorsque des perturbations apparaissent.

Dans ce cas, on associe à T1 une résistance de collecteur R2 reliant le collecteur de T1 à la tension continue +V d'alimentation du circuit régulateur associé, qui est en général de l'ordre de 5 à 8 volts.

Le collecteur de T1 est relié à la grille d'un transistor de signal TS, réalisé ici en technologie MOS mais pour des courants faibles, la source de TS étant reliée à la masse et son drain étant relié à la tension d'alimentation précitée par une résistance R3.

Du fait que la capacité de grille de TS est trop faible pour assurer l'intégration des signaux impulsionnels provoqués par la commutation de T1, on prévoit en outre un condensateur C3 qui relie ensemble la grille et le drain du transistor TS. Par effet Miller, on réalise à l'aide du condensateur C3 un filtrage passe-bas du signal de sortie de T1, sans que la valeur de C3 n'ait à être élevée. On utilise par exemple pour la capacité C3 une valeur de 30 pF, si bien qu'elle peut être intégrée aisément sur une puce de silicium, d'autant plus qu'étant exposée à des tensions faibles (au maximum de 5 à 8 volts, tension +V), elle peut posséder une épaisseur de diélectrique réduite.

Ainsi la sortie logique du circuit de la figure 3 peut être utilisée d'une part pour forcer à zéro l'excitation de l'alternateur en cas d'apparition de perturbations à haute fréquence, et d'autre part pour commander alors un circuit de gestion de lampe-témoin en empêchant son allumage lorsque l'excitation est temporairement nulle du fait de ces perturbations.

Bien entendu, la présente invention n'est nullement limitée aux formes de réalisation décrites et représentées, mais l'homme de l'art saura y apporter toute variante ou modification conforme à son esprit.

## Revendications

1. Circuit de détection de composantes à haute fréquence dans un potentiel de batterie (B+) d'un réseau de bord de véhicule automobile, caractérisé en ce qu'il comprend un circuit RC (R1, C1) et des moyens à semi-conducteurs (D1, T1) aptes à commuter sur les alternances desdites composantes à haute fréquence lorsqu'à la fois leur période est inférieure à la constante de temps du circuit RC et leur amplitude est supérieure à des tensions de jonction dans lesdits moyens à semi-conducteurs.

2. Circuit de détection selon la revendication 1, caractérisé en ce qu'il comprend une capacité (C1) dudit circuit RC entre une entrée pour le potentiel de batterie (B+) et les moyens à semi-conducteurs (D1, T1), et une résistance (R1) dudit circuit RC entre les moyens à semi-conducteurs et un potentiel de référence fixe.

3. Circuit de détection selon la revendication 1 ou 2, caractérisé en ce que les moyens à semi-conducteurs comprennent une diode (D1) et un transistor bipolaire (T1), la diode étant montée en anti-parallèle sur une jonction base-émetteur du transistor, et le collecteur du transistor constituant la sortie du circuit.

4. Circuit selon l'une des revendications 1 à 3, caractérisé en ce que la constante de temps du circuit RC est d'environ 10⁻⁶ seconde.

5. Circuit de détection de composantes à haute fréquence dans un potentiel de batterie d'un réseau de bord de véhicule automobile, caractérisé en ce qu'il comprend une entrée pour ledit potentiel (B+), reliée à une première borne d'un condensateur (C1) dont la seconde borne est reliée à une première borne d'une résistance (R1) ainsi qu'à la base d'un transistor bipolaire NPN (T1) et à la cathode d'une diode (D1), la deuxième borne de la résistance (R1), l'anode de la diode (Dl) et l'émetteur du transistor (T1) étant reliées à un potentiel de référence fixe.

6. Circuit selon la revendication 5, caractérisé en ce que la constante de temps du circuit RC constitué par le condensateur (C1) et la résistance (R1) est d'environ 10⁻⁶ seconde.

7. Circuit régulateur de la tension de charge d'une batterie par un alternateur dans un réseau de bord de véhicule automobile, comprenant un transistor de puissance (Tex) en technologie MOS pour la commutation d'un enroulement d'excitation (IND) de l'alternateur, dont la grille reçoit un signal de commande d'excitation (SCE), caractérisé en ce qu'il comprend en outre un circuit de détection selon l'une des revendications 1 à 6 dont la sortie est également reliée à ladite grille, la capacité de grille dudit transistor de puissance (Tex) assurant une intégration des impulsions électriques provoquées par les commutations à la sortie du circuit de détection et une suppression de l'excitation lorsque des composantes à haute fréquence sont détectées.

8. Circuit régulateur de la tension de charge d'une batterie par un alternateur dans un réseau de bord de véhicule automobile, comprenant un circuit de gestion de lampe-témoin d'anomalies de fonctionnement dudit circuit régulateur qui comporte des moyens de détection d'anomalies et des moyens de commande de l'allumage d'une lampe-témoin en présence d'anomalies, caractérisé en ce qu'il comprend un circuit de détection selon l'une des revendications 1 à 6 et un étage de mise en forme de signaux (TS, R2, R3, C3) prévu à la sortie du circuit de détection pour convertir les impulsions électriques engendrées par ce dernier en un signal logique apte à empêcher l'allumage de la lampe-témoin en présence d'une anomalie liée à l'existence de composantes à haute fréquence dans le potentiel de batterie.

9. Circuit régulateur selon la revendication 8, caractérisé en ce que l'étage de mise en forme comporte un transistor (TS) et une capacité (C3) opérant par effet Miller.

10. Circuit régulateur selon l'une des revendications 7 à 9, caractérisé en ce qu'il est entièrement réalisé sur une puce de silicium unique.

11. Procédé de gestion d'un mode dégradé de fonctionnement d'un circuit régulateur de la charge d'une batterie par un alternateur dans un réseau de bord de véhicule automobile, caractérisé en ce qu'il comprend les étapes suivantes :
(a) on détecte l'apparition de composantes perturbatrices à haute fréquence dans le potentiel de batterie (B+) du réseau; et
(b) aussi longtemps que ces composantes perturbatrices sont présentes, on supprime l'excitation de l'alternateur tout en empêchant l'allumage d'une lampe-témoin révélant une excitation insuffisante de l'alternateur.
